# EUROPEAN PATENT APPLICATION

(11) **EP 4 494 917 A1**
(43) Date of publication of application: **22.01.2025**
(21) Application number: 23315287.5
(22) Date of filing: 21.07.2023
(51) Int. Cl.: B60L 53/14, B60L 53/18, B60L 53/66, B60L 53/68, B60L 55/00, H02J 3/32

(54) **BI-DIRECTIONAL VEHICLE AC CHARGING APPARATUS**

(71) Applicant: HAGER-ELECTRO SAS, 67210 Obernai (FR)
(72) Inventor: Helfter, Marc, 67114 ESCHAU (FR); Raubuch, Sebastian, 66663 MERZIG (DE); Hager, Torsten, 55218 INGELHEIM AM RHEIN (DE); Reiner, Ulrich, 67691 HOCHSPEYER (DE)
(74) Representative: Cabinet Nuss

(57) **Abstract**

A Bi-directional AC charging apparatus (100) for EVs comprises a first communication interface (104) configured for communicating with an EVSE connected to a first power interface (120) of the charging apparatus (100), a second communication interface (106) configured for communicating with an EV connected to a second power interface (130) of the charging apparatus (100), a circuit (110) configured for determining a geo-location of the apparatus (100), a GASP circuit (112), and one or more switches (140) for selectively establishing and interrupting, respectively, an electrical connection between the apparatus and an electrical vehicle supply equipment (EVSE) connected to the first power interface (120), an electrical connection between the apparatus and an EV connected to the second power interface (130), and/or an electrical connection between the EVSE and the EV connected to the respective first and second power interfaces (120, 130), under control of a control computer (102).

## Description

### FIELD OF THE INVENTION

The present invention relates to charging of electrical vehicles (EV), in particular to selectively charging the vehicle from the power grid or providing power from the vehicle's battery to the charging point, also known as vehicle-to-home (V2H) when the vehicle can provide energy only locally to the home, or vehicle-to-grid (V2G), when the vehicle can provide energy back to the public power grid.

### BACKGROUND

V2G or V2H is a system that lets EVs communicate with the public power grid or the home, respectively, and provide electricity back to the grid or home to meet energy demand.

For V2H to operate, a compatible bidirectional charger and additional equipment are required, including an energy meter (CT meter) that is capable of monitoring and measuring energy flow in two directions, i.e., from the power grid to the home and from the home to the power grid, which must be installed at the main power grid connection point of the home. When the EV is connected to a charging point installed in the home, its battery is sufficiently charged, and the system detects power grid energy consumed by the home, the CT meter may signal the bidirectional EV charger to discharge an equal amount of energy, thus offsetting any power drawn from the power grid. Such action may be useful for reducing the power grid load in certain situations, e.g., when the power demand in a local section of the power grid is very high and the grid power generation is low, e.g., at times when the amount of renewable energy that is produces is low, and spare power utilities have not been fully activated for compensation. Powering the home from the EV's battery may also be used for reducing the amount of energy drawn from the power grid during high-cost phases, notably in power grids that have dynamic energy pricing. V2H also allows consumers to provide electricity to their homes from their EVs' batteries during a power grid outage.

In addition to V2H, the V2G functionality requires correspondingly equipped and configured vehicles and charging stations, including a data connection with the power grid operator, for negotiating when to provide energy to the home and, through the CT meter, to the power grid, and how much energy to provide. This data connection is necessary due to the power grid operator's overall control of the power grid or the power grid section, which in particular ensures the power grid's stability and prevents local or regional power grid shutdown due to severe imbalance between two or more power grid sections. For example, EV owners can leverage their vehicles' considerable battery capacity to sell electricity back to the grid during peak load. Users can set a cap on how much power can be drawn to prevent overutilization of the battery, and they can further customize settings to choose to buy back electricity when grid energy prices are low and sell to the grid only at peak prices.

Today many homes are equipped with AC EV charging points that can only charge a vehicle and are not capable of V2H or V2G operation. Most of these AC charging points cannot be easily upgraded, e.g., through a simple software (SW) update, and replacing the existing charging points way before the end of their useful lifetime is not an economic and ecologic solution. In addition, the energy meters in the home may not be adapted to communicate with the grid.

### SUMMARY OF THE INVENTION

It is, therefore, an object of the present invention to provide a simple and cost-effective means for converting a unidirectional AC charging point into a bi-directional charging station.

This object is achieved by the bi-directional vehicle AC charging apparatus of claim 1, the method of claim 9, the computer system of claim 12, and the method of claim 13. A corresponding computer program product and a computer-readable medium are provided in claims 14 and 15, respectively. Advantageous embodiments and developments are provided in the respective dependent claims.

The present invention considers choke points presented by legal and power grid operator's requirements, such as a general preference for a fixed installation, which provides a static structure of power grid segments that is managed more easily than power grid sections that can change dynamically without prior notice. In addition, different power grid segments operated by the same or by different operators may have different capabilities and requirements, which further complicates achieving the invention's objectives. These capabilities and requirements are specified in technical specifications, also referred to as grid codes. Grid codes define the parameters a facility connected to a public electric grid must meet to ensure safe, secure and economic proper functioning of the electric system. The facility can be an electricity generating plant, a consumer, or another network. The grid code is specified by an authority responsible for the system integrity and network operation. Its elaboration usually implicates network operators, i.e., distribution or transmission system operators, representatives of users and, to an extent varying between countries, the regulating body. Contents of a grid code vary depending on the transmission company's requirements. Typically, a grid code will specify the required behaviour of a connected generator during system disturbances. These include voltage regulation, power factor limits and reactive power supply, response to a system fault, e.g., short-circuit, response to frequency changes on the power grid, and requirement to "ride through" short interruptions of the connection. There is not a common grid code in all countries and each electric power grid or power grid section may have its own grid code.

Thus, in accordance with a first aspect of the invention a bi-directional AC charging apparatus for EVs is presented. The charging apparatus comprises a control computer, a first and a second communication interface, a circuit for determining a geo-location of the apparatus, a first power interface and a second power interface, and one or more switches for selectively establishing and interrupting, respectively, an electrical connection between the apparatus and an electrical vehicle supply equipment (EVSE) connected to the first power interface, an electrical connection between the apparatus and an EV connected to the second power interface, and/or an electrical connection between the EVSE and the EV connected to the respective first and second power interfaces.

Optionally, a grid and system protection (GASP) circuit may be provided, e.g., in case such circuit is not provided in the EV or its on-board charger. The GASP circuit may be communicatively connected to the control computer of the charging apparatus. When the GASP circuit is provided in the EV or the on-board charger the charging apparatus may be configured to send grid-code parameters to the EV via the corresponding communication interface.

All of the elements mentioned before are communicatively connected to the control computer, which receives signals and/or data related to their respective operation from the elements and/or transmits control signals and/or data to the respective elements, during startup, operation and shutdown thereof.

The first power interface is configured for connecting the bi-directional AC charging apparatus to an EVSE, e.g., an AC charging point, and may comprise, in addition to one or more power terminals, one or more sensor, signal or data terminals.

The second power interface is configured for connecting the bi-directional AC charging apparatus to an EV and may likewise comprise, in addition to one or more power terminals, one or more sensor, signal or data terminals.

The first communication interface may be configured for communicating with an EVSE to which the bi-directional AC charging apparatus is connected. The communication may involve protocols such as those stipulated in ISO 15118, using a standard or advanced communication parameter set, or may be involve a low-level PWM communication, using a basic communication parameter set. The communication may run via the one or more data terminals of the first power interface.

The second communication interface may be configured for communicating with an EV to which the bi-directional AC charging apparatus is connected, e.g., via a corresponding charging cable that has a communication line in addition to power connections. The communication may likewise involve protocols such as those stipulated in ISO 15118, for negotiating or setting bi-directional charging parameter sets for the AC/DC and DC/AC converter of the EV. The communication may run via the one or more data terminals of the second power interface.

The grid and system protection circuit is adapted to determine appropriate grid codes based on the geo-location of the bi-directional AC charging apparatus, and to automatically configure the grid safety system accordingly. Determining the appropriate grid codes may comprise accessing a local or remote database.

In one or more embodiments the bi-directional AC charging apparatus further comprises a third communication interface) configured for wirelessly communicating with the EV, the EVSE, a smart meter or a smart meter gateway of a premise in which the EVSE is installed, a local wireless network of the premise in which the EVSE is installed, a local wireless network of the EV, and/or a communication interface associated with the power grid and/or the power grid operator. The third wireless interface may include but is not limited to wireless communication via public wireless communication networks such as 5G, LTE, UMTS, GPRS and the like, or as stipulated in standards such as the IEEE802.11 family, the IEEE 802.15.1 family, the Bluetooth SIG standards, Zigbee, Z-Wave, LoRaWAN (ITU-T Y.4480) and the like. The third communication interface may be used, *inter alia*, for accessing a remote database for determining appropriate grid codes, for obtaining or improving the accuracy of a geo-location, and/or for communicating with a home energy management system (HEMS) of a place at which the EVSE is installed. The remote database storing grid codes may be run and maintained by grid operators or by a third party.

Communicating with a HEMS may permit dynamic control of the bi-directional AC charging apparatus, e.g., for topping up energy provided into the power grid by a PV system installed in the home to a desired level. This may be useful in case the energy provided by the PV system is subject to fluctuations, and the homeowner has agreed to provide a certain amount of energy to the grid. Other applications of communicating with a HEMS may include dynamically controlling the power provided from the EV to the grid depending on the momentary demand in the home. To this end the bi-directional AC charging apparatus may communicate with a smart electricity meter provided in the home.

In one or more embodiments the bi-directional AC charging apparatus has a standardized household power outlet, and the control computer is configured for selectively enabling or disabling a V2L mode, i.e., providing power to the standardized household power outlet from the EV's battery.

In one or more embodiments the bi-directional AC charging apparatus further comprises a battery for supplying the apparatus' circuitry in case an EVSE is not connected to the first power interface or is inactive, or in case an EV is not connected to the second power interface or is inactive. This may permit the apparatus initiating a communication with the EVSE, upon which the EVSE may provide power to the apparatus, i.e., entering an active mode. This may also permit the apparatus initiating a communication with the EV, upon which the EV may provide power to the apparatus, i.e., entering an active mode, e.g., when the apparatus is configured for providing power to a common household outlet provided with the apparatus.

In one or more embodiments of the bi-directional AC charging apparatus the circuit configured for determining a geo-location of the apparatus comprises or implements a satellite-based determining of the geo-location or is configured for obtaining geo-location information provided by the EV, the EVSE or a handheld device of a user. Alternatively, the circuit for determining the geo-location may be configured to be programmed with such information upon installation or via an interface accessible to a user.

In one or more embodiments of the bi-directional AC charging apparatus the GASP circuit is configured to detect presence and/or activation of an EVSE connected to the first power interface and to default to a V2L-mode whenever an EVSE point is not detected and an EV is connected to the second power interface.

In one or more embodiments of the bi-directional AC charging apparatus the control computer is configured, when an ESVE is connected to the first power interface and is active, to receive, from the ESVE or from a local or remote database and based on or for a current geo-location, a set of parameters for configuring the GASP circuit. The set of parameters may comprise maximum values for a power to be provided from the ESVE to the EV or for a power provided from the EV to the ESVE.

In one or more embodiments of the bi-directional AC charging apparatus the control computer is configured, when an external battery and/or a non-buffering power generator, e.g., a PV system, a Diesel generator or the like, is connected to the charging apparatus or the home grid, for communicating with a smart meter or smart home gateway of the home grid, for obtaining information about a current amount of energy provided to the home grid from the power grid, and for controlling the amount of energy provided from the EV in accordance with a predetermined power grid load relieve value. The power grid load relieve value permits adjusting the amount of energy that is to be provided from the EV to the grid in accordance with the momentary power provided from the external battery or the non-buffering power generator so as to provide an essentially constant reduction of the load on the power grid. It may also be possible to adjust the charging power to the EV in accordance with the power grid load relieve value, e.g., to use only the power provided from the external battery and/or a non-buffering power generator that exceeds the power required for maintaining the agreed power grid load reduction.

In accordance with a second aspect of the invention a method of operating a bi-directional AC charging apparatus for EVs in accordance with the first aspect of the invention is presented. The method comprises, after establishing physical connections between the apparatus and the EVSE and the apparatus and the EV, establishing a current geo-location of the apparatus. Once the current geo-location is established, a grid code for the power grid at the current geo-location is determined. The apparatus configures a power converter of the EV in accordance with the parameters associated with the grid code, and signals to the EVSE and the EV that a power connection between the EVSE and the EV may now be established. The configuration may comprise an amount of power that is to be received from the AC charging point or that is to be provided into the AC charging point. The apparatus acts as an intermediary between the EV and the AC charging point, and will intercept and, if required, modify any communication between the two prior to forwarding the original or modified communication.

In one or more embodiments establishing a current geo-location of the apparatus comprises obtaining the geo-location from a satellite navigation component of the apparatus, or obtaining data concerning the geo-location from a satellite navigation component of the EV, from the EVSE or from a handheld device of a user. If the apparatus has no satellite navigation component, the corresponding information may be acquired through one of the communication interfaces of the apparatus.

In one or more embodiments determining the grid code for the current geo-location comprises retrieving such information from a local or remote database. In the latter case the corresponding information may be acquired through the third communication interface of the apparatus.

In accordance with a third aspect of the invention a computer system arranged for providing grid codes and associated geo-locations to one or more apparatus in accordance with the first aspect of the invention is presented. The computer system comprises one or more microprocessors, volatile and non-volatile memory, one or more communication interfaces and a database storing the grid codes and associated geo-locations in a retrievable manner. The non-volatile memory stores computer program instructions which, when executed by the one or more microprocessors, configure the computer system to receive a request for providing a grid code from an apparatus in accordance with the first aspect of the invention via one of the one or more communication interfaces, to retrieve, from the database, a grid code associated with a geo-location provided or identified in the request, and to transmit the grid code to the requesting apparatus via one of the one or more communication interfaces.

In accordance with a fourth aspect of the invention a method of providing grid codes and associated geo-locations to one or more apparatus in accordance with the first aspect of the invention is presented. The method comprises receiving a request for providing a grid code from an apparatus via a communication interface, retrieving a grid code associated with a geo-location provided or identified in the request from a database, and transmitting the retrieved grid code to the requesting apparatus via the communication interface.

The methods of operating a bi-directional AC charging apparatus and of providing grid codes to such AC charging apparatus, respectively, may be represented by computer program instructions which, when executed by a microprocessor, cause the microprocessor and/or control hardware components of the apparatus to execute one or more steps of the method in accordance with the second aspect of the invention as presented hereinbefore, or configure the computer system in accordance with the third aspect of the invention to execute one or more steps of the method in accordance with the fourth aspect of the invention as presented hereinbefore, respectively.

The computer program instructions may be retrievably stored or transmitted on a computer-readable medium or data carrier. The medium or the data carrier may by physically embodied, e.g., in the form of a hard disk, solid state disk, flash memory device or the like. However, the medium or the data carrier may also comprise a modulated electro-magnetic, electrical, or optical signal that is received by a computer by means of a corresponding receiver, and that is transferred to and stored in a memory of the computer.

The bidirectional AC charging apparatus presented hereinbefore advantageously converts a unidirectional EVSE into a bidirectional EVSE, without requiring a replacement of the existing electrical EVSE installation and without the need to upgrade the electrical installation to which the EVSE is connected.

### BRIEF DESCRIPTION OF THE DRAWING

In the following section aspects of the invention will be described with reference to the drawing in which
- Fig. 1: shows a schematic block diagram of a first exemplary embodiment of a bi-directional AC charging apparatus for EVs in accordance with the first aspect of the invention,
- Fig. 2: shows a schematic block diagram of a second exemplary embodiment of a bi-directional AC charging apparatus for EVs in accordance with the first aspect of the invention,
- Fig. 3: shows a schematic flow diagram of a method in accordance with the second aspect of the invention,
- Fig. 4: shows a block diagram of a computer system in accordance with the third aspect of the invention, and
- Fig. 5: shows a schematic representation of a system comprising a conventional AC charging point, a conventional EV capable of V2G or V2H, and an apparatus in accordance with the first aspect of the invention,

In the figures identical or similar elements may be referenced using the same reference designators.

### DESCRIPTION OF EMBODIMENTS

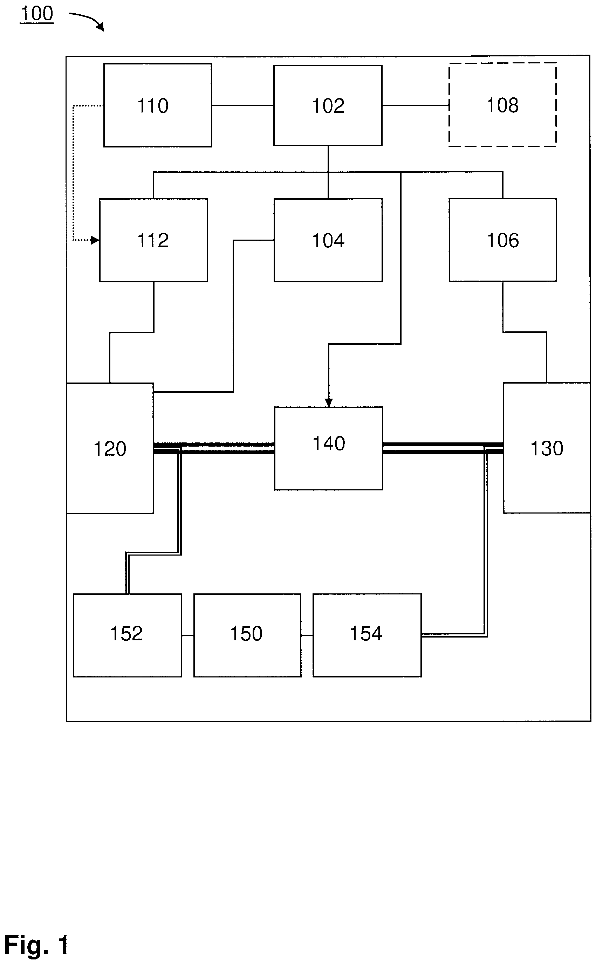

Figure 1 shows a schematic block diagram of a first exemplary embodiment of a bi-directional AC charging apparatus 100 for EVs in accordance with the first aspect of the invention. The charging apparatus 100 comprises a control computer 102, which is communicatively connected to a first communication interface 104, to a second communication interface 106, to a circuit 110 configured for determining a geo-location of the apparatus 100, and to a GASP circuit 112. The apparatus may comprise an optional third communication interface 108, the optionality indicated by the box drawn in dashed lines.

The apparatus 100 further has a first power interface 120, which is configured for connection to an EVSE, e.g., an AC vehicle charging point, that is connected to a house's energy supply system and ultimately to a power grid (EVSE and house energy supply system not shown in the figure). The first power interface 120 may comprise one or more sensor, signal or data terminals, in addition to one or more power terminals (terminals not shown in the figure). The GASP circuit 112 may further be connected to sensors and control circuits for interrupting electrical power connections (not shown in the figure). The first communication interface 104 is connected to a data terminal of the first power interface 120, for communicating with the EVSE when the apparatus 100 is connected thereto.

The apparatus 100 further has a second power interface 130, which is configured for connection to an EV. The second power interface 130 may comprise one or more sensor, signal or data terminals, in addition to one or more power terminals (not shown in the figure). The second communication interface 106 is connected to a data terminal of the second power interface 130, for communicating with the EV when the apparatus 100 is connected thereto.

The apparatus 100 yet further has a switch arrangement 140 configured for selectively establishing or interrupting an electrical connection between the one or more power terminals of the first and the second power interfaces 120, 130. In the figure, the electrical power connection is shown as a bold double-line. The switch arrangement 140 is controlled by the control computer 102, as indicated by the arrow. It is to be noted, that communication or signal connections shown in the figure may be uni- or bi-directional as required unless explicitly shown in the figure or stated otherwise in the description.

The apparatus 100 further comprises a buffer power supply 150, which is connected to the power terminals of the first power interface 120 via a first AC/DC converter 152 and to the power terminals of the second power interface 130 via a second AC/DC converter 154. The buffer power supply 150, which is adapted for powering the control computer 102 and/or one or more of the circuits communicatively connected thereto while a power supply either from an AC vehicle charging point or an EV to the apparatus is not established, comprises a battery (not shown in the figure), that can be charged from the power terminals of the first and the second power interface 120, 130 via the respective first and second AC/DC converters 152 or 154. It is to be noted that a single AC/DC converter may be provided, which may be selectively coupled to the first or second power interface 120, 130 via a corresponding switch arrangement.

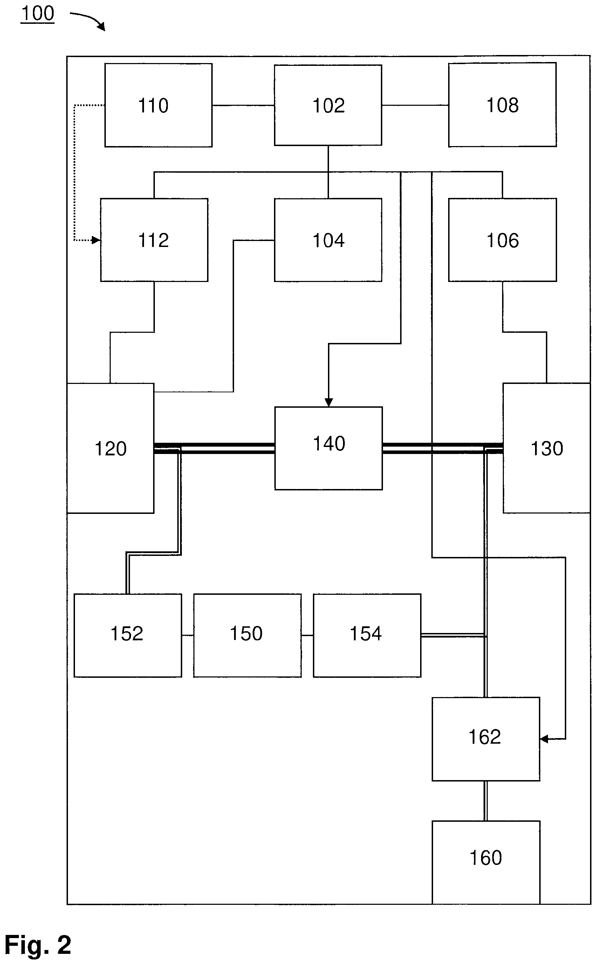

Figure 2 shows a schematic block diagram of a second exemplary embodiment of a bi-directional AC charging apparatus 100 for EVs in accordance with the first aspect of the invention. The elements 102 through 154 are similar or identical to those described with reference to figure 1 and will not be discussed in detail again.

The apparatus 100 in accordance with the second exemplary embodiment further comprises a V2L power interface 160, which may be single- or multi-phase, and which is connected to the power terminals of the second power interface via a corresponding single- or multi-phase switch arrangement 162. Switch arrangement 162 is controlled by control computer 102.

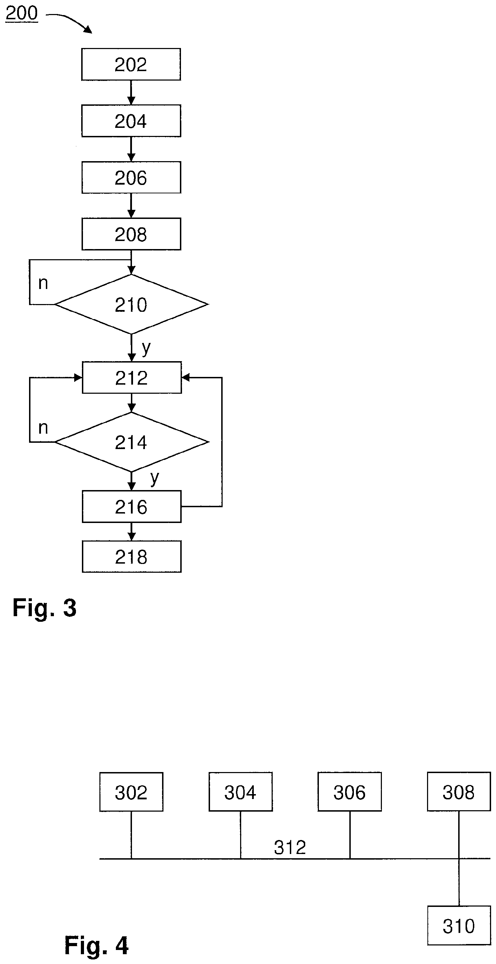

Figure 3 shows a schematic flow diagram of a method 200 in accordance with the second aspect of the invention. After establishing physical connections between the apparatus and the AC charging point and the apparatus and the EV, the method comprises, in step 202, establishing a current geo-location of the apparatus. Once the geo-location is established, a grid code for the power grid at the current geo-location is determined in step 204. In step 206 the apparatus 100 configures a power converter of the EV in accordance with the parameters associated with the grid code, and signals, in step 208, to the AC charging point and the EV that a power connection between the AC charging point and the EV may now be established, e.g., by operating the switch arrangement 140. In step 210 the method checks if the power connection is established. In the positive case, "yes"-branch of step 210, the EV's power converter is controlled, in step 212, to operate in accordance with the configured operation parameters. In step 214 the method checks if the configuration of the EV's power converter needs changing. If not, "no"-branch of step 214, the method continues, in step 212, operation as previously configured. If the configuration of the EV's power converter needs changing, "yes"-branch of step 214, the method applies the changed configuration in step 216 and continues, in step 212, operation as newly configured or, in case the configuration implies that the operation is to be terminated, ends operation in step 218.

Figure 4 shows a block diagram of a computer system 300 in accordance with the third aspect of the invention, arranged for providing grid codes and associated geo-locations to one or more apparatus in accordance with the first aspect of the invention. In the computer system 300, one or more microprocessors 302, volatile and non-volatile memory 304, 306, one or more communication interfaces 308 and a database 310 storing the grid codes and associated geo-locations in a retrievable manner are communicatively connected via one or more signal and/or data lines or buses 312. The non-volatile memory 306 stores computer program instructions which, when executed by the one or more microprocessors 302, configure the computer system 300 to receive a request for providing a grid code from an apparatus 100 in accordance with the first aspect of the invention via one of the one or more communication interfaces 308, to retrieve, from the database 310, a grid code associated with a geo-location provided or identified in the request, and to transmit the grid code to the requesting apparatus 100 via one of the one or more communication interfaces 308.

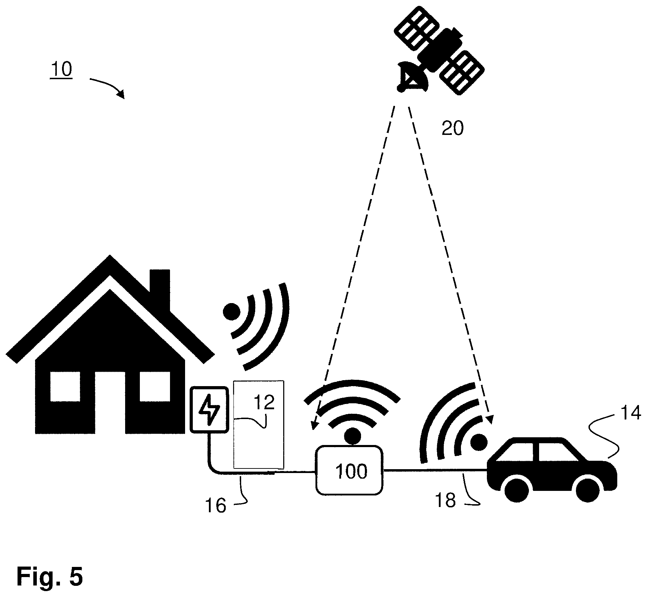

Figure 5 shows a schematic representation of a system 10 comprising a conventional AC charging point 12 of a premise, a conventional EV 14 capable of V2G or V2H, and an apparatus 100 in accordance with the first aspect of the invention. The conventional AC charging point 12 is connected to the apparatus 100 via a cable 16 that may be part of the AC charging point 12, of the apparatus 100, or a separate part. Likewise, the EV 14 is connected to the apparatus 100 via a cable 18 that may be part of the apparatus 10 or a separate part. The apparatus 100 and/or the EV 14 may determine the current geo-location by means of a satellite-based geolocation system, although any other geolocation system providing sufficient accuracy may be used. The apparatus 100, the EV and/or a smart home system may be arranged to provide communication via a wireless communication link which facilitates faster data speeds and may improve security by connecting to a premise's communication system and ultimately to the internet, e.g., for accessing a database providing grid codes. For example, the wireless communication link may connect to an on-premise WiFi network and to the internet through a DSL or fibre connection. When a smart meter gateway is hooked up to the on-premise WiFi network, a direct connection between the apparatus 100 and the smart meter gateway may be established. In case a connection between the apparatus 100 and the smart meter gateway is established, communication with the electricity provider, gateway administrator and/or grid operator may be enabled, for providing a grid code or other configuration information, or for providing metering data to the EV. This may enable to provide just enough energy to the premise's electrical installation to power a currently active appliance, preventing any power to be drawn from the grid. It may further be possible to power the premise in case of a black out or brown out, if the smart meter signals to do so and the power distribution board is provided with a separator switch for severing the premise's connection to the grid. Information about a grid outage may also be directly provided to the apparatus 100 through the wireless connection by a grid operator, depending on the type of connection.

It may also be possible to selectively enable V2G or charging operation whenever it may be advantageous for stabilizing the grid and ensuring grid stability. The wireless link may also be adapted for connecting to the 4G5G mobile network, to a LoRaWAN or similar networks. In any case common protocols can be used, inter alia, for controlling and monitoring charging, energy management, V2G aggregation, billing, etc. The common protocols may include but are not limited to IEC 63110, OCPP, EEEBUS, OpenADR.

### LIST OF REFERENCE DESIGNATORS (PART OF THE DESCRIPTION)

| | | | |
|---|---|---|---|
| 100 | apparatus | 208 | activate EV charging point |
| 102 | control computer | 210 | check power connection |
| 104 | first communication interface | 212 | operation |
| 106 | second communication interface | 214 | configuration change? |
| 108 | third communication interface | 216 | change configuration |
| 110 | geo-location circuit | 218 | end operation |
| 112 | GASP circuit | | |
| 120 | first power interface | 300 | computer system |
| 130 | second power interface | 302 | microprocessor |
| 140 | switch arrangement | 304 | volatile memory |
| 150 | buffer power supply | 306 | non-volatile memory |
| 152 | first AC/DC converter | 308 | communication interface |
| 154 | second AC/DC converter | 310 | database |
| 160 | V2L power interface | 312 | signal/data line/bus |
| 162 | V2L switch arrangement | | |
| | | 400 | method |
| 200 | method | 402 | receive request |
| 202 | establish geo-location | 404 | retrieve grid code |
| 204 | determine grid code | 406 | transmit grid code |
| 206 | configure EV power converter | | |

## Claims

1. Bi-directional AC charging apparatus (100) for EVs comprising a control computer (102), a first communication interface (104), communicatively connected to the control computer (102), configured for communicating with an EVSE that is connected to a first power interface (120) of the charging apparatus (100), a second communication interface (106), communicatively connected to the control computer (102), configured for communicating with an EV that is connected to a second power interface (130) of the charging apparatus (100), a circuit (110) configured for determining a geo-location of the apparatus (100), and one or more switches (140) for selectively establishing and interrupting, respectively, an electrical connection between the apparatus and an electrical vehicle supply equipment (EVSE) connected to the first power interface (120), an electrical connection between the apparatus and an EV connected to the second power interface (130), and/or an electrical connection between the EVSE and the EV connected to the respective first and second power interfaces (120, 130), under control of the control computer (102).

2. The bi-directional charging apparatus (100) of claim 1, further comprising a third communication interface (108) configured for wirelessly communicating with the EV, the EVSE, a smart meter or a smart meter gateway of a premise in which the EVSE is installed, a local wireless network of the premise in which the EVSE is installed, a local wireless network of the EV, and/or a communication interface associated with the power grid and/or the power grid operator.

3. The bi-directional charging apparatus (100) of claim 1 or 2, wherein the apparatus has a standardized household power outlet, and wherein the control computer is configured for selectively enabling or disabling a V2L mode.

4. The bi-directional charging apparatus (100) of one of claims 1 to 3, further comprising a battery for supplying the apparatus' circuitry in case an EVSE is not connected to the first power interface (120) or is inactive, or in case an EV is not connected to the second power interface (130) or is inactive.

5. The bi-directional AC charging apparatus (100) of one or more of claims 1 to 4, wherein the circuit (110) configured for determining a geo-location of the apparatus (100) implements a satellite-based determining of the geo-location or is configured for obtaining geo-location information provided by the EV, the EVSE or a handheld device of a user.

6. The bi-directional AC charging apparatus (100) of one or more of claims 1 to 5, wherein the GASP circuit (112) is configured to detect presence and/or activation of an EVSE connected to the first power interface (120) and to default to a V2L-mode whenever an EVSE point is not detected and an EV is connected to the second power interface (130).

7. The bi-directional AC charging apparatus (100) of one of claims 1 to 6 wherein, when an EVSE is connected to the first power interface (120) and is active, the control computer (102) is configured to receive, from the EVSE, or from a local or remote database, and based on or for a current geo-location, a set of parameters for configuring the GASP circuit (112).

8. The bi-directional AC charging apparatus (100) of one of claims 1 to 7 wherein, when an external battery and/or a non-buffering power generator is connected to the charging apparatus or the home grid, the control computer (102) is configured for communicating with a smart meter or smart home gateway of the home grid, for obtaining information about a current amount of energy provided to the home grid from the power grid, and for controlling the amount of energy provided from the EV in accordance with a predetermined power grid load relieve value.

9. Method (200) of operating a bi-directional AC charging apparatus (100) in accordance with one of claims 1 to 8, the method comprising, after establishing physical connections between the apparatus (100) and an EVSE and the apparatus and an EV:
- determining (202) a current geo-location of the apparatus (100),
- obtaining (208) a grid code for the power grid at the current geo-location,
- configuring (214) a power converter of the EV in accordance with the parameters associated with the grid code,
- signalling (216) to the EVSE and the EV that a power connection between the EVSE and the EV may now be established, and
- transferring (218) power in accordance with the configuration.

10. The method (200) of claim 9 wherein, when the AC charging apparatus (100) comprises a third communication interface (108), the step of determining (202) a current geo-location of the apparatus (100) comprises:
- establishing (204) a communication connection with the EVSE, the EV, or a handheld device of a user, and
- obtaining (206) data concerning the geo-location via the communication connection.

11. The method (200) of claim 9 or 10 wherein obtaining (208) a grid code for the power grid at the current geo-location comprises:
- retrieving (210) such information from a local database of the AC charging apparatus (100), or
- when the AC charging apparatus (100) comprises a third communication interface (108), retrieving (212) such information from a remote database.

12. Computer system (300) comprising one or more microprocessors (302), volatile (304) and non-volatile (306) memory, one or more communication interfaces (308) and a database (310) storing the grid codes and associated geo-locations in a retrievable manner, the aforementioned elements being communicatively connected via one or more signal and/or data lines or buses (312), wherein the non-volatile memory (306) stores computer program instructions which, when executed by the one or more microprocessors (302), configure the computer system (300) to receive (402) a request for providing a grid code from an apparatus (100) in accordance with one or more of claims 1 to 8 via one of the one or more communication interfaces (308), to retrieve (404), from the database (310), a grid code associated with a geo-location provided or identified in the request, and to transmit (406) the grid code to the requesting apparatus (100) via one of the one or more communication interfaces (308).

13. Method (400) of providing grid codes to an AC charging apparatus (100) in accordance with one or more of claims 1 to 8, comprising:
- receiving (402) a request for providing a grid code from an apparatus (100) via a communication interface (308),
- retrieving (404) a grid code associated with a geo-location provided or identified in the request from a database (310), and
- transmitting (406) the retrieved grid code to the requesting apparatus (100) via the communication interface (308).

14. Computer program product comprising computer program instructions which, when executed by a microprocessor (302) of an apparatus (100) in accordance with one or more of claims 1 to 8 in an associated volatile memory (304), configure the microprocessor (302) and/or control hardware components of the apparatus (100) to execute one or more steps of the method (200) in accordance with one or more of claims 9 to 11, or which, when executed by a microprocessor (302) of a computer system (300) in accordance with claim 12, configure the computer system (300) to execute one or more steps of the method (400) in accordance with claim 13.

15. Computer-readable medium or data carrier retrievably storing computer program instructions representing the computer program product of claim 14.
